# EUROPÄISCHE PATENTANMELDUNG

(11) **EP 1 477 258 A1**
(43) Veröffentlichungstag der Anmeldung: **17.11.2004**
(21) Anmeldenummer: 03011213.0
(22) Anmeldetag: 16.05.2003
(51) Int. Cl.: B23K 1/005, G02B 21/00

(54) **Vorrichtung und Verfahren zur lokalen Temperaturbehandlung mit Wärmedetektor und Bildverarbeitung**

(71) Anmelder: FISBA OPTIK AG, 9016 St. Gallen (CH)
(72) Erfinder: Moser, Hansruedi, 9452 Hinterforst (CH); List, Eckhard, Dr., 9000 St. Gallen (CH)
(74) Vertreter: OK pat AG

(57) **Zusammenfassung**

Die Vorrichtung (10) umfasst Mittel zur Lieferung von kollimiertem Laserlicht an eine Ablenkeinheit (14), der ein spezielles F-Theta Objektiv (15) nachgeschaltet ist, und Mittel zum optischen Ankoppeln eines optionalen Pyrometers (18) zum Ermitteln der Temperatur eines sich auf einer Abtastfläche (17.1) befindenden Beobachtungspunktes. Eine Auskoppelvorrichtung (12) befindet sich in der optischen Strecke (13), die das kollimierte Laserlicht über die Ablenkeinheit (14) zu dem F-Theta Objektiv (15) führt, und umfasst Mittel (12.1, 12.2), um eine Strahlung eines ersten Wellenlängenbereichs des Rückstrahls einer Bildverarbeitungsvorrichtung (19) und Licht eines zweiten Wellenlängenbereichs des Rückstrahls dem Pyrometer (18) zuzuführen.

## Beschreibung

Die vorliegende Erfindung bezieht sich auf eine Vorrichtung, ein Bearbeitungssystem und ein Verfahren zur lokalen Temperaturbehandlung, mit integrierter Überwachung gemäss dem Oberbegriff des Patentanspruchs 1, 14, bzw. 15.

Zur Positionierung eines Laserstrahls auf ein zu bearbeitendes Werkstück und zur Bearbeitung des Werkstücks mit einem Laserstrahl werden Vorrichtungen verschiedener Art eingesetzt. Im Folgenden sind zwei Beispiele erwähnt, die zum Stand der Technik gehören.

Aus dem US-Patent US 5,646,411, ist eine Vorrichtung bekannt, die zu Untersuchungszwecken einen Laserstrahl niedriger Leistung mit einer primären Wellenlänge mittels einer Ablenkvorrichtung auf eine zu untersuchende Probe lenkt. Bei der Probe handelt es sich zum Beispiel um eine fluoreszierende Probe, die Licht emittiert, das von der Vorrichtung entlang des gleichen optischen Weges zurück geführt wird und dann über einen dichroitischen Filter einem Photodetektor zugeführt wird. Die Vorrichtung kann nur in einem sehr eng begrenzten Wellenlängenbereich eingesetzt werden, der in einem Band von ca. 200nm um die primäre Wellenlänge herum liegt. Es können aber auch mehrere Laser eingesetzt werden, die in verschiedenen Wellenlängenbereichen arbeiten. Ein Hauptaugenmerk dieses US-Patentes richtet sich auf die gleichmässige Detektionsempfindlichkeit. Der Abtastbereich (Scanbereich) kann in der Diagonale, je nach Objektiv, bis zu 1cm betragen. Die Vorrichtung hat eine Auflösung von bis zu 0.6 µm.

Eine Vorrichtung zum Bearbeiten eines Werkstücks ist aus einer Publikation der Firma FISBA OPTIK, Schweiz, bekannt, die den Titel "FLS HIGHLIGHT" trägt und im Jahr 2002 publiziert wurde. Die Publikation betrifft eine Vorrichtung, die durch den Anmelder der vorliegenden Patentanmeldung unter dem Namen FLS-ultrascan vermarktet wird. Die Vorrichtung dient zum punktgenauen Kunststoffschweissen, zum Verschweissen von Lichtwellenleitern, oder zum Laserlöten eines Werkstücks indem ein Laserstrahl hoher Leistung mittels einer Ablenkvorrichtung auf das Werkstück gelenkt wird. Die Vorrichtung weist eine integrierte Überwachung auf, die durch Abtastung des Werkstücks die Wärmestrahlung mittels eines Pyrometers erfassen kann. Sowohl der Laserstrahl, als auch die von Werkstück ausgehende Wärmestrahlung wird durch ein F-Theta Objektiv geführt. Mit einer solchen Vorrichtung lässt sich eine gewisse Automatisierung der Abläufe erzielen, wobei der Vorrichtung eine Begrenzung auf einen Wellenlängenbereich von 800nm bis 2000nm inhärent ist.

Verschiedene Anwendungen erfordern neben der Überwachung der Wärmestrahlung, wie zum Beispiel beim FLS-ultrascan, auch eine optische Überwachung, um die Prozesse in denen eine solche Vorrichtung zum Einsatz kommt weiter optimieren und automatisieren zu können. Die optische Überwachung kann zum Beispiel zu folgenden Zwecken eingesetzt werden:
- Visualisierung für einen Bediener;
- Optische Beurteilung eines Werkstücks oder eines ausgeführten Prozessschritts durch einen Bediener;
- Bildverarbeitung, zum Beispiel, um mittels Computer die Ausrichtung des zu bearbeitenden Werkstücks kontrollieren zu können;
- Automatische Prozessüberwachung im sichtbaren Wellenlängen Bereich;
- Semi-manuelle Bearbeitung, indem ein Bediener an einem Bildschirm die zu bearbeitende Stelle einjustieren kann, bevor dann zum Beispiel das Laser-Schweissen ausgeführt wird;
- Intelligentes Prozessmanagement (IPM) oder intelligente Prozesskontrolle;
- Schnellere und präzisere Strahlpositionierung;

Es ist ein Problem der bisher bekannten Vorrichtungen, dass sie nur in begrenzten Wellenlängenbereichen einsetzbar sind. Arbeitet die Vorrichtung nur in einem eng begrenzten Wellenlängenbereich, wie zum Beispiel die in dem genannten US-Patent beschriebene Vorrichtung, so ist es relativ unproblematisch das Laserlicht und das zurückzuführende Licht durch die gleiche Optik zu führen, ohne das dadurch zu grosse Abweichungen entstehen. Um so grösser der abzudeckende Wellenlängenbereich ist, um so schwieriger wird es, die Optik so auszulegen, dass es nicht zu lateralen oder axialen Farbfehlern und anderen Abweichungen kommt.

Die Aufgabe der vorliegenden Erfindung besteht darin, eine verbesserte Vorrichtung und ein verbessertes Bearbeitungssystem der eingangs genannten Art zu schaffen.

Die Aufgabe der vorliegenden Erfindung besteht darin, ein verbessertes Verfahren bereit zu stellen.

Diese Aufgabe wird erfindungsgemäss durch eine Vorrichtung nach dem kennzeichnenden Teil des Patentanspruchs 1, ein Bearbeitungssystem nach dem kennzeichnenden Teil des Patentanspruchs 14 bzw. durch ein Verfahren nach dem kennzeichnenden Teil des Patentanspruchs 15 gelöst.

Die erfindungsgemässe Vorrichtung und das erfindungsgemässe Bearbeitungssystem bringt den Vorteil mit sich, dass sie eine punktgenaue Temperaturbehandlung zusammen mit einer integrierten Überwachung des Arbeitsbereiches ermöglicht.

Vorteilhafte Ausgestaltungen der Erfindung sind den abhängigen Ansprüchen zu entnehmen.

Die Erfindung ist im Folgenden anhand in den Zeichnungen dargestellter Ausführungsbeispiele ausführlich beschrieben. Es zeigt:
- Fig. 1: eine schematische Darstellung des Aufbaus einer erfindungsgemässen Vorrichtung,
- Fig. 2: ein farbkorrigiertes F-Theta Objektiv, gemäss Erfindung, zu einer solchen Vorrichtung, und
- Fig. 3: beispielhafter Strahlengang durch das farbkorrigierte F-Theta Objektiv.

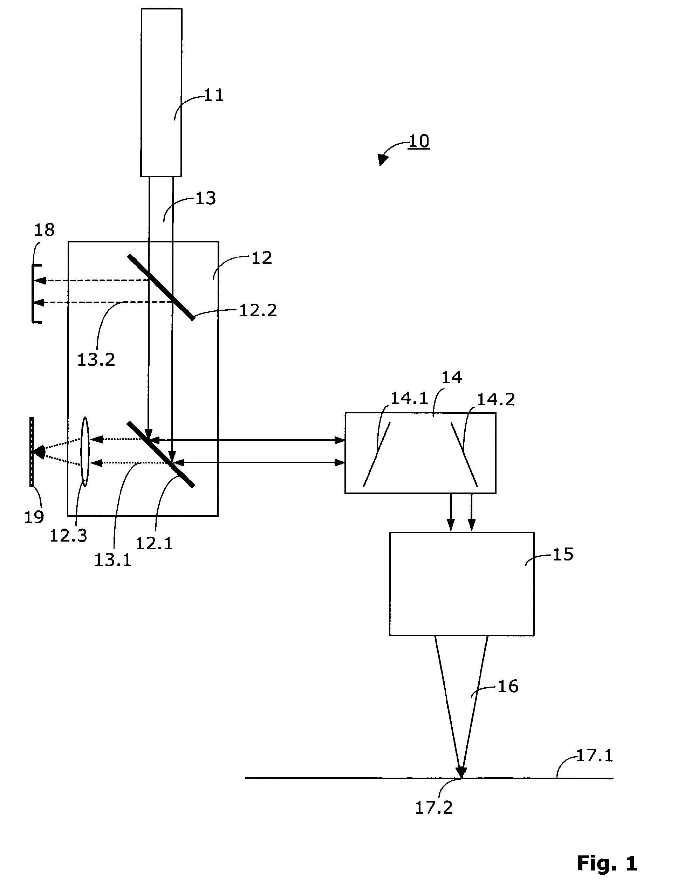

Die Vorrichtung 10 nach Fig. 1, die vorgesehen ist, um zusammen mit einer Laserlichtquelle oder einem Laseranschluss zum optischen Ankoppeln einer Laserlichtquelle betrieben zu werden, umfasst eine Auskoppelvorrichtung 12. Die Laserlichtquelle (nicht in Fig. 1 gezeigt), die auch in die Vorrichtung 10 integriert sein kann, liefert über eine optische Strecke 13 kollimiertes Laserlicht an die Auskoppelvorrichtung 12.

Es ist zum Beispiel möglich, einen Lichtleiter 11, mit einer entsprechenden Auskopplungsoptik zur Kollimation, zum Ankoppeln einer externen Laserlichtquelle vorzusehen, wie in Fig. 1 gezeigt. Die Laserlichtquelle kann beispielsweise einen Festkörperlaser (zum Beispiel einen Nd-YAG-Laser, Faserlaser, Scheibenlaser), bzw. Halbleiterlaser umfassen, der über eine Lichtleiterverbindung 11 oder direkt an den Laseranschluss angekoppelt ist, wobei das kollimierte Laserlicht in einem Wellenlängenband zwischen 800 nm und 1600 nm liegen kann.

Die Auskoppelvorrichtung 12 ist mit Auskoppelmitteln 12.1 und 12.2 versehen, die beispielsweise je einen dichroitischen Filter, insbesondere ein dielektrisch beschichtetes Element, umfassen können. In der gezeigten Anordnung hat der Filter 12.2 vorzugsweise eine hohe Transmission für die Laserstrahlung und der Filter 12.1 hat eine hohe Reflektivität für die Laserstrahlung.

In der Anordnung nach Fig. 1 lässt der eine Filter 12.2 die Laserstrahlung durch und reflektiert die Temperaturstrahlung 13.2. Der andere Filter 12.1 hingegen reflektiert die Laserstrahlung und die Temperaturstrahlung, lässt jedoch sichtbares Licht 13.1 durch.

Die Vorrichtung 10 umfasst auch eine Ablenkeinheit 14 und ein sogenanntes, ihr nachgeschaltetes, F-Theta Objektiv 15, das einen von der Auskoppelvorrichtung 12 über die Ablenkeinheit 14 geführten Lichtstrahl 16 auf eine Abtastfläche 17.1 fokussiert, wobei der Lichtstrahl 16, der hier als gebündelter Lichtstrahl bezeichnet wird, durch eine kontrollierte bzw. gesteuerte Ablenkung des kollimierten Laserstrahls mittels der Ablenkeinheit 14 auf einen Zielpunkt 17.2 dieser Abtastfläche 17.1 richtbar ist. Die Abtastfläche 17.1 hat eine Grösse von bis zu 500 mm x 500 mm und vorzugsweise eine Grösse von bis zu 200 mm x 200 mm.

In die Vorrichtung 10 kann eine Bildverarbeitungsvorrichtung 19 (zum Beispiel ein CCD-Element oder eine CCD-Kamera; Charge Coupled Device), oder Teile davon, integriert sein. Zusätzlich kann ein optionaler Detektor für Wärmestrahlung (zum Beispiel ein Pyrometer 18 oder ein Infrarotsensor), oder Teile davon, in die Vorrichtung 10 integriert sein. Das Pyrometer 18 und/oder die Bildverarbeitungsvorrichtung 19 können auch extern angeordnet sein und über entsprechende Anschlüsse optisch angekoppelt werden. Der gesamte Aufbau kann modular sein. Dementsprechend kann beispielsweise ein Pyrometeranschluss für das optische Ankoppeln des Pyrometers 18 zum Ermitteln der Temperatur eines Beobachtungspunktes und/oder ein Anschluss für das optische Ankoppeln der Bildverarbeitungsvorrichtung 19 vorhanden sein.

Die Bildverarbeitungsvorrichtung 19 stellt elektrische Signale bereit, die Bildinformation repräsentieren. Die Bildsignale können einer Verarbeitung zugeführt werden, um zum Beispiel auf einem Bildschirm dargestellt zu werden. Es kann ein Restlichtverstärker vorgesehen sein, um auch bei geringem Restlicht Bildinformation zu erhalten.

Das F-Theta Objektiv 15 umfasst gemäss der gezeigten Ausführungsform der Erfindung drei Elemente, davon zwei Elemente 15.1, 15.2 mit sammelnder Wirkung und ein Element 15.3 mit zerstreuender Wirkung. Falls erforderlich kann ein Schutzglas 15.4 vorgesehen sein. Das Element 15.2 stellt ein Kittglied dar, das in Kombination mit den Elementen 15.1 und 15.3 die erforderliche Abbildungsqualität bewirkt. Durch geeignete Kombination der Glassorten der Elemente 15.1 bis 15.3 wird eine Farbkorrektur in den drei Wellenlängenbereichen (sichtbarerer Bereich, Arbeitsbereich für den Laser, Bereich der Wärmestrahlung) erreicht.

Vorzugsweise liegt die Eintrittspupille 15.5 des F-Theta Objektivs 15 auf dem Auslenkspiegel 14.1.

Mit der Auslenkung der Spiegel 14.1 und 14.2 wird mit dem gebündelten Lichtstrahl 16 eine Abtastfläche 17.1 von bis zu 500 mm x 500 mm, und vorzugsweise von bis zu 200 mm x 200 mm überstrichen.

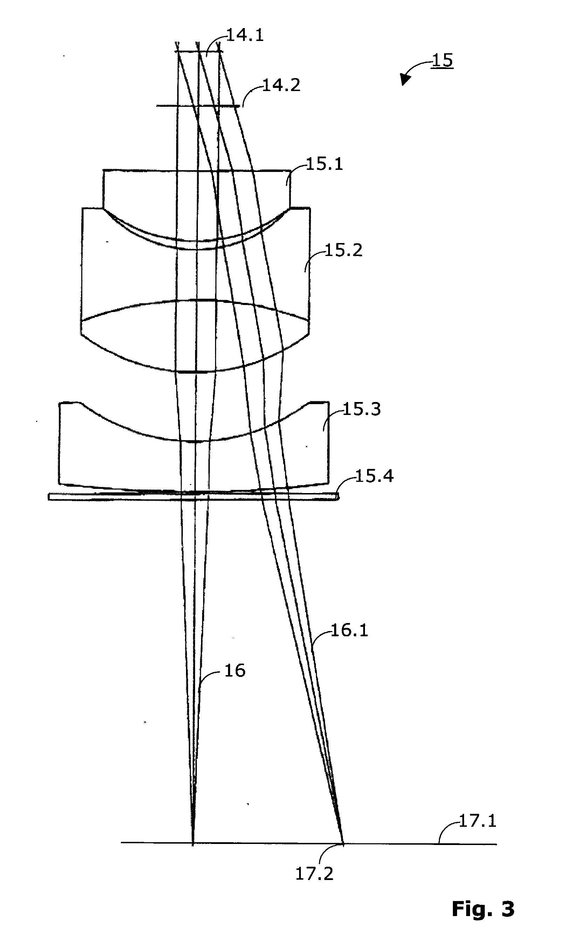

Der Strahlengang durch das F-Theta Objektiv 15 ist in Fig. 3 anhand zweier Strahlenbündel gezeigt. Das erste Strahlenbündel 16 wird durch die Spiegel 14.1, 14.2 nicht abgelenkt und verläuft mittig durch das Objektiv 15 und zentral auf die Abtastfläche 17.1 fokussiert. Ein zweites Strahlenbündel 16.1 wird seitlich nach rechts abgelenkt und auf den Bearbeitungspunkt 17.2 fokussiert.

Die Linearität zwischen der Brennweite und dem Ablenkwinkel (F-Theta Bedingung) ist über die Abtastfläche 17.1 besser als 1% und lokal besser als 1.5%. Durch eine entsprechende Änderung der Optik des F-Theta Objektivs ist auch eine telezentrische Abbildung erreichbar, was jedoch zur Folge hat, dass die Abmessungen des F-Theta Objektivs wesentlich vergrössert werden.

Auf Grund dieser Farbkorrektur des F-Theta Objektivs, fallen der Zielpunkt des Lasers, das Beobachtungsgebiet der Bildverarbeitungsvorrichtung (CCD) und der Messflecks des optionalen Pyrometers mit für die Anwendung geforderter Genauigkeit zusammen.

Auf Grund der Farbkorrektur des F-Theta Objektivs wird erreicht, dass das Zentrum des Fokusdurchmessers der Laserstrahlung (der hier als Zielpunkt bezeichnet wird) und das Zentrum des Messflecks des Pyrometers, sowie das Zentrum des Beobachtungsgebiets der Bildverarbeitungsvorrichtung mit für die Anwendung geforderter Genauigkeit zusammen fallen. Dass heisst mit anderen Worten, dass sie praktisch übereinander liegen. Eine störende Aufspaltung der drei entsprechenden Wellenlängenbereiche (sichtbarerer Bereich, Arbeitsbereich für den Laser, Bereich der Wärmestrahlung) wird somit vermieden. Als störend wird eine Aufspaltung der Wellenlängenbereiche für die Laserstrahlung und der Wärmestrahlung bezeichnet, falls diese grösser wird als 25 bis 40% des Fokusdurchmessers des Laserstrahls auf der Bearbeitungsebene. Für den Wellenlängenbereich der Laserstrahlung und den sichtbaren Bereich der Bildverarbeitungsvorrichtung ist die Aufspaltung weniger kritisch. In diesem Fall muss das Beobachtungsgebiet mindestens den Zielpunkt und dessen Umgebung darstellen. Hingegen muss für den sichtbaren Wellenlängenbereich (für sich) eine Farbkorrektur realisiert sein, um ein scharfes Bild zu erhalten.

Vorzugsweise weisen die optischen Elemente eine hohe Transmission bis in den infraroten Wellenlängenbereich auf. Das entsprechende Wellenlängenband kann sich daher von 450 nm bis 2200 nm, vorzugsweise von 500 nm bis 2000 nm, oder auch von 450 nm bis 2000 nm bzw. von 500 nm bis 2200 nm erstrecken. Dabei kann das F-Theta Objektiv 15 in einem dieser Wellenlängenbereiche, oder mindestens im Bereich von 790 nm bis 990 nm und/oder im Bereich von 1800 bis 2200 nm, farbkorrigiert sein, um die beschriebene störende Aufspaltung zu vermeiden.

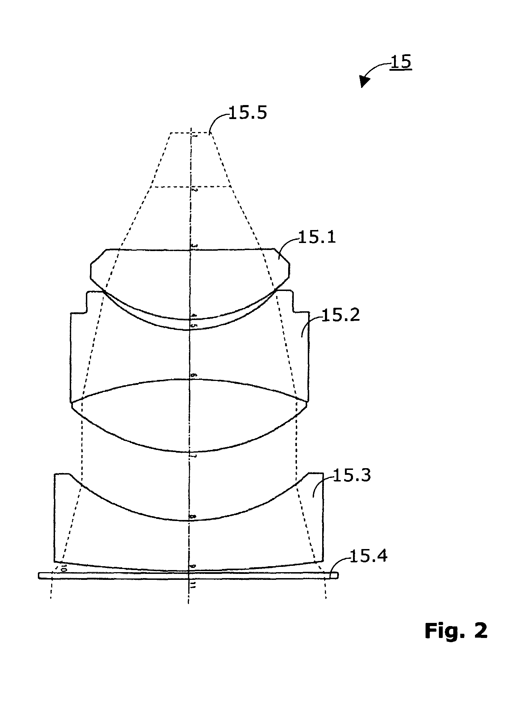

Die Vorrichtung 10 nach den Figuren 1, 2 und 3 funktioniert folgendermassen: Das kollimierte Laserlicht von der Laserlichtquelle wird über die Auskoppelmittel 12.2 und 12.1, die Ablenkeinheit 14 und das F-Theta Objektiv 15 auf einen Zielpunkt 17.2 der Abtastfläche 17.1 gerichtet bzw. fokussiert, die sich in der Brennpunktebene des Objektivs 15 befindet. Zu diesem Zweck weist die Ablenkeinheit 14 Mittel bzw. Scanner-Mittel zum Abtasten der Abtastfläche 17.1 auf. Bei der Ablenkeinheit 14 kann es sich beispielsweise um eine X-Y-Ablenkeinheit handeln, die durch die kontrollierte bzw. gesteuerte Ablenkung des Laserstrahls einen gebündelten Lichtstrahls 16 auf einen Zielpunkt 17.2 der Abtastfläche 17.1 richtet. Es kann ein Scanner als Ablenkeinheit 14 eingesetzt werden, der zwei bewegliche Spiegel 14.1, 14.2 umfasst, die durch eine Ansteuerung in die gewünschte Stellung bringbar sind. Es kann sich zum Beispiel um einen galvanischen Scanner 14 handeln.

Es können aber auch andere optomechanische Ablenkeinheiten eingesetzt werden, die eine X-Y Ablenkung ermöglichen. Besonders geeignet sind Scanner mit einem rotierenden Polygonalen Spiegel, Rotierende Holografische Scanner, oder Scanner mit Schwingenden Prismen.

Die Erfindung kann jedoch auch eine Verschiebung in Z-Richtung umfassen, wobei dann Anpassungen an der Optik vorgenommen werden müssen. Eine Verschiebung in Z-Richtung kann man zum Beispiel durch ein bewegliches Objektiv realisieren, um dadurch den Fokus zu verändern.

Im Bereich des Bearbeitungspunktes 17.2 (Zielpunkt) entsteht eine durch Illumination und/oder Bearbeitung hervorgerufene Strahlung. Die in diesem Bereich reflektierte und/oder emittierte Strahlung verläuft durch das F-Theta Objektiv 15 zurück und wird der Einfachheit halber als Rückstrahl bezeichnet. Der Rückstrahl verläuft entlang der optischen Strecke 13. Dass heisst, der Rückstrahl und der Laserstrahl verlaufen zu mindestens zum Teil coaxial.

Die Auskoppelvorrichtung 12 ist derart ausgebildet, dass Licht eines ersten Wellenlängenbereichs des Rückstrahls zur Bildverarbeitungsvorrichtung 19 und Licht eines zweiten, höher gelegenen Wellenlängenbereichs des Rückstrahls zum optionalen Pyrometer 18 gelangen kann. Über die Auskoppelmittel 12.1 gelangt daher ein Teil 13.1 dieser Strahlung an eine CCD-Kamera 19 und über die Auskoppelmittel 12.2 ein Teil 13.2 dieser Strahlung an einen Pyrometer 18, oder an einen oder eine Gruppe von anderen Wärmedetektoren, die im infraroten oder in benachbarten Bereichen arbeiten.

Zu diesem Zweck ist beispielsweise der eine Filter 12.1, der in der optischen Strecke 13 angeordnet ist, ausgebildet, um Licht des zweiten Wellenlängenbereich zu reflektieren und Licht 13.1 des ersten Wellenlängenbereichs durchzulassen bzw. auszukoppeln und gegebenenfalls über eine Linse 12.3 der Bildverarbeitungsvorrichtung 19 zuzuführen. Dabei ist der andere Filter 12.2, der sich ebenfalls in der optischen Strecke 13 befindet, ausgebildet, um Licht 13.2 des Rückstrahls in dem zweiten Wellenlängenbereich zu reflektieren bzw. auszukoppeln und dem Pyrometer 18 zuzuführen. Die Bildverarbeitungsvorrichtung 19 kann daher Licht 13.1 im ersten Wellenlängebereich, vorzugsweise im sichtbaren Bereich, empfangen. Dieses Licht 13.1 wird in Bildinformation umgesetzt.

Die Bildverarbeitungsvorrichtung 19, die vorzugsweise ein CCD-Element umfasst, stellt mindesten von einem Teil der Abtastfläche 17.1 (dieser Teil wird hier als Beobachtungsgebiet bezeichnet) darstellbare oder verarbeitbare Bildinformation bereit, wobei der erste Wellenlängebereich vorzugsweise zwischen 400 nm und 700 nm liegt. Das optionale Pyrometer 18 kann dementsprechend Licht 13.2 in einem höheren Wellenlängenbereich, beispielsweise zwischen 1800 nm und 2200 nm empfangen und somit Temperaturmessungen im Bereich des Beobachtungspunkts (dieser Bereich wird hier als Messfleck bezeichnet) durchführen, der aufgrund der speziellen Ausführung des F-Theta Objektivs 15 praktisch mit dem Bearbeitungspunkt (Zielpunkt) übereinstimmt.

Da die Abtastfläche 17.1 eine Grösse von bis zu 500mm x 500mm haben kann, sind die Anforderungen an das F-Theta Objektiv 15 besonders hoch, um Farblängs- und Farbquerfehler zu vermeiden über den gesamten Bereich der Abtastfläche 17.1 zu gewährleisten.

Die erfindungsgemässe Vorrichtung kann als Teil eines Bearbeitungssystems zum Schweissen, zum Löten und/oder zum Temperaturbehandeln von verschiedenen Materialien eingesetzt werden. Es können zum Beispiel Kunststoffe verschweisst oder verklebt werden, es können Lötverbindungen erzeugt werden, oder Materialien können lokal aufgeschmolzen werden. Es ist auch möglich, Oberflächen zu bearbeiten, Materialien zu verändern und durch lokale Bestrahlung Reaktionen auszulösen.

Je nach konkreter Ausführungsform, sind die CCD Kamera und das Pyrometer "inline" ausgeführt, d.h. es legen alle Strahlanteile, respektive die Wellenlängenanteile, im Wesentlichen identische Wege im Strahlengang zurück, um dann ausgekoppelt zu werden.

Es können gemäss Erfindung Laser eingesetzt werden, die eine Leistung von einigen Watt und vorzugsweise von 400W oder mehr haben.

Zusätzlich zu dem (Haupt-)Laser, der zum Beispiel für die Bearbeitung eines Werkstücks eingesetzt wird, kann ein sogenannter Pilotlaser eingesetzt werden, der vorzugsweise einen Laserstrahl im roten Wellenlängenbereich (z.B. 670nm) emittiert. Der (Haupt-)Laser emittiert Strahlung im nichtsichtbaren Bereich und es für den Bediener oder für eine im sichtbaren Bereich arbeitende automatische Steuerung nicht möglich zu erkennen, ob der Zielpunkt des (Haupt-)Lasers auf die "richtige" Stelle des Werkstücks ausgerichtet ist. Durch Verwendung des Pilotlasers, dessen Laserstrahl die gleiche optische Strecke 13 zurücklegt wir der (Haupt-)Laser, ist erkennbar, ob die richtige Ausrichtung gegeben ist. Vorzugsweise ist der Pilotlaser in den Laserkopf des (Haupt-)Lasers integriert.

Die Erfindung umfasst auch, wie eingangs erwähnt, ein Verfahren zur punktgenauen Temperaturbehandlung und zur simultanen Überwachung der Fläche 17.1 durch Abtastung derselben unter Anwendung des kollimierten Laserstrahls, und unter Einsatz der Ablenkeinheit 14, des ihr nachgeschalteten F-Theta Objektivs 15 und eines optisch angekoppelten Pyrometers 18 zum Ermitteln der Temperatur eines Beobachtungspunktes auf der Abtastfläche 17.1. Der Pyrometer 18 ist optional. Bei diesem Verfahren wird ein an einem Zielpunkt 17.2 oder an einem ihm benachbarten Punkt reflektierter und/oder ein von einem dieser Punkte emittierter Lichtstrahl durch das F-Theta Objektiv 15 und die Ablenkeinheit 14 zurückgeführt. Dieser Lichtstrahl wird als Rückstrahl bezeichnet. Der Rückstrahl wird ausgekoppelt, um einerseits eine Strahlung eines ersten Wellenlängenbereichs des Rückstrahls der Bildverarbeitungsvorrichtung 19 zuzuführen, und um andererseits Strahlung eines zweiten Wellenlängenbereichs des Rückstrahls dem Pyrometer 18 zuzuführen.

Die Bildverarbeitungsvorrichtung 19 stellt Bildinformation in Form elektrischer Signale bereit und die Bildinformation kann einer Auswertung zugeführt werden. Diese Auswertung erfolgt vorzugsweise digital. Es kann zu diesem Zweck ein Datenverarbeitungssystem, zum Beispiel ein Computer vorgesehen sein.

Die Ablenkeinheit 14 wird kontrolliert angesteuert, zum Beispiel von einem Datenverarbeitungssystem. Dadurch können im Bereich der Abtastfläche 17.1 mit dem Laserstrahl einzelne Punkte, eine Fläche oder ein Linienzug mit dem gebündelten Lichtstrahl 16 bearbeitet werden.

Das erfindungsgemässe Verfahren kann zum Schweissen, Löten, Verkleben und/oder zum Temperaturbehandeln im Bereich der Abtastfläche 17.1 eingesetzt werden.

## Patentansprüche

1. Vorrichtung (10) mit einem Laseranschluss für das Ankoppeln einer Laserlichtquelle (11), die kollimiertes Laserlicht abgibt, einer Ablenkeinheit (14) zum Abtasten einer Abtastfläche (17.1), und einem F-Theta Objektiv (15), **dadurch gekennzeichnet, dass** die Vorrichtung (10) umfasst:
- eine Bildverarbeitungsvorrichtung (19), die in einem ersten Wellenlängebereich Licht empfängt, das in elektrische Signale umsetzbar ist,
- eine optische Strecke (13) entlang der das kollimierte Laserlicht von dem Laseranschluss über die Ablenkeinheit (14) zu dem F-Theta Objektiv (15) führt, wobei
i. das Laserlicht durch die Ablenkeinheit (14) dem F-Theta Objektiv (15) zugeführt wird und als gebündelter Lichtstrahl (16) austritt,
ii. der gebündelte Lichtstrahl (16) durch Ablenkung des Laserlichts mittels der Ablenkeinheit (14) auf einen Zielpunkt (17.2) der Abtastfläche (17.1) richtbar ist,
iii. ein im Bereich des Zielpunkts (17.2) reflektierter und/oder emittierter Lichtstrahl durch das F-Theta Objektiv (15) zurückgeführt und als Rückstrahl austritt, der mindestens teilweise entlang der optischen Strecke (13) verläuft,
- eine Auskoppelvorrichtung (12) vorhanden ist, die Licht des ersten Wellenlängenbereichs des Rückstrahls der Bildverarbeitungsvorrichtung (19) zuführt.

2. Vorrichtung (10) nach Anspruch 1 **dadurch gekennzeichnet, dass** die Vorrichtung (10) einen Anschluss für das Ankoppeln eines Wärmedetektors, vorzugsweise eines Pyrometers (18), umfasst, wobei die Auskoppelvorrichtung (12) Licht eines zweiten Wellenlängenbereichs des Rückstrahls dem Wärmedetektor (18) zuführt.

3. Vorrichtung (10) nach Anspruch 1 oder 2, **dadurch gekennzeichnet, dass** das F-Theta Objektiv (15) optische Elemente (15.1, 15.2, 15.3) umfasst, die so ausgelegt und in Bezug zueinander angeordnet sind, dass Licht in einem Wellenlängenband durch das F-Theta Objektiv (15) führbar ist, ohne dass es zu einer störenden räumlichen Aufspaltung verschiedener Wellenlängenbereiche des Wellenlängenbandes kommt.

4. Vorrichtung (10) nach Anspruch 1, 2 oder 2, **dadurch gekennzeichnet, dass** die Ablenkeinheit eine X-Y-Ablenkeinheit (14) ist, die eine Ablenkung des gebündelten Lichtstrahls (16) bewirkt, der die Abtastfläche (17.1) abtastet, wobei die Abtastfläche (17.1) eine Grösse bis zu 500mm x 500mm und vorzugsweise eine Grösse von zu 200mm x 200mm hat.

5. Vorrichtung (10) nach einem der Ansprüche 1 bis 4, **dadurch gekennzeichnet, dass** die Bildverarbeitungsvorrichtung (19) dazu ausgelegt ist, Bildinformation in Form der elektrischen Signale mindesten von einem Teil der Abtastfläche (17.1) darstellbar oder verarbeitbar bereitzustellen, wobei der erste Wellenlängenbereich vorzugsweise im sichtbaren Wellenlängenbereich liegt.

6. Vorrichtung (10) nach einem der Ansprüche 1 oder 5, **dadurch gekennzeichnet, dass** das F-Theta Objektiv (15) mindestens die folgenden drei optischen Elemente umfasst, nämlich eine Sammellinse (15.1), ein Kittglied mit zwei Linsen (15.2) und eine Zerstreuungslinse (15.3).

7. Vorrichtung (10) nach einem der vorhergehenden Ansprüche, **dadurch gekennzeichnet, dass** die Auskoppelvorrichtung (12) einen Filter (12.1) umfasst, der in der optischen Strecke (13) angeordnet ist und Licht (13.1) in dem ersten Wellenlängenbereich durchlässt, um das Licht (13.1) des ersten Wellenlängenbereichs auszukoppeln und der Bildverarbeitungsvorrichtung (19) zuzuführen, und/oder dass die Auskoppelvorrichtung (12) einen Filter (12.2) umfasst, der in der optischen Strecke (13) angeordnet ist und Licht (13.2) in dem zweiten Wellenlängenbereich durchlässt, um das Licht (13.2) des zweiten Wellenlängenbereichs auszukoppeln und dem Wärmedetektor zuzuführen.

8. Vorrichtung (10) nach einem der vorhergehenden Ansprüche, **dadurch gekennzeichnet, dass** sie modular aufgebaut ist und mindestens eines der folgenden Elemente abnehmbar oder auswechselbar ist:
- die Laserlichtquelle,
- die Bildverarbeitungsvorrichtung (19), oder
- der Wärmedetektor.

9. Vorrichtung (10) nach einem der Ansprüche 1 bis 8, **gekennzeichnet durch** mindestens eine der folgenden Eigenschaften:
- das kollimierte Laserlicht liegt in einem Wellenlängenband zwischen 800nm und 1600nm;
- der erste Wellenlängenbereich liegt zwischen 400nm und 700nm;
- der zweite Wellenlängenbereich liegt zwischen 1800nm und 2200nm;
- das F-Theta Objektiv ist in einem Wellenlängenband von 400nm bis 2200nm, vorzugsweise von 450nm bis 2000nm, farbkorrigiert.

10. Vorrichtung (10) nach einem der Ansprüche 1 bis 9, **dadurch gekennzeichnet, dass** die Bildverarbeitungsvorrichtung (19) ein CCD-Element oder eine CCD-Kamera umfasst.

11. Vorrichtung (10) nach einem der Ansprüche 1 bis 10, **dadurch gekennzeichnet, dass** das F-Theta Objektiv (15) eine Eintrittspupille (15.5) aufweist, die auf einem Spiegel (14.1) der Ablenkeinheit (14) liegt.

12. Vorrichtung (10) nach einem der Ansprüche 1 bis 11, **dadurch gekennzeichnet, dass** die optischen Elemente (15.1, 15.2, 15.3) eine hohe Transmission in dem Wellenlängenbereich von 400nm bis 2200nm, vorzugsweise von 500nm bis 2000nm, aufweisen.

13. Vorrichtung (10) nach einem der Ansprüche 1 bis 12, **dadurch gekennzeichnet, dass** sie einen Festkörper- und/oder einen Halbleiterlaser umfasst, der über eine Lichtleiterverbindung mit Kollimation, oder direkt an den Laseranschluss angekoppelt ist.

14. Bearbeitungssystem zum Schweissen, Löten, Verkleben und/oder zum Temperaturbehandeln im Bereich einer Abtastfläche (17.1), **dadurch gekennzeichnet, dass** das System eine Vorrichtung (10) gemäss einem der Ansprüche 1 bis 13 umfasst.

15. Verfahren zur lokalen Temperaturbehandlung einer Abtastfläche (17.1) durch Beaufschlagung eines Zielpunkt (17.2) auf der Abtastfläche (17.1) mit einem fokussierten Laserstrahl (16, 16.1) unter Einsatz einer Ablenkeinheit (14), der ein F-Theta Objektiv (15) nachgeschaltet ist, **dadurch gekennzeichnet, dass**
- durch Ansteuerung der Ablenkeinheit (14) der fokussierte Laserstrahl (16, 16.1) auf den Zielpunkt (17.2) gerichtet wird,
- ein im Bereich des Zielpunktes (17.2) reflektierter und/oder ein von dem Bereich des Zielpunkt (17.2) emittierter Lichtstrahl als Rückstrahl durch das F-Theta Objektiv (15) und die Ablenkeinheit (14) zurückgeführt wird, und
- ein erster Wellenlängenbereich (13.1) des Rückstrahls ausgekoppelt wird, um Bildinformation bereitzustellen, wobei der erste Wellenlängenbereich zumindest teilweise im sichtbaren Wellenlängenbereich liegt.

16. Verfahren nach Anspruch 15, **dadurch gekennzeichnet, dass** ein Wärmedetektor, vorzugsweise ein Pyrometer vorgesehen ist, wobei ein zweiter Wellenlängenbereich (13.2) des Rückstrahls ausgekoppelt wird, um Wärmestrahlung dem Wärmedetektor zuzuführen.

17. Verfahren nach Anspruch 15 oder 16, **dadurch gekennzeichnet, dass** die Bildinformation in Form elektrischer Signale durch eine Bildverarbeitungsvorrichtung (19) bereitgestellt wird und dass die Bildinformation einer Auswertung zugeführt wird, die vorzugsweise digital erfolgt.

18. Verfahren nach Anspruch 15, 16 oder 17, **dadurch gekennzeichnet, dass** die Ablenkeinheit (14) so kontrolliert angesteuert wird, dass im Bereich der Abtastfläche (17.1) mit dem Laserstrahl einzelne Punkte, eine Fläche oder ein Linienzug bearbeitet werden können.

19. Verfahren zum Schweissen, Löten, Verkleben und/oder zum Temperaturbehandeln im Bereich einer Abtastfläche (17.1), **dadurch gekennzeichnet, dass** das Verfahren gemäss einem oder mehrerer der Ansprüche 15 bis 18 ausgeführt wird.
